# EUROPÄISCHE PATENTANMELDUNG

(11) **EP 0 765 906 A2**
(43) Veröffentlichungstag der Anmeldung: **02.04.1997**
(21) Anmeldenummer: 96114397.1
(22) Anmeldetag: 09.09.1996
(51) Int. Cl.: C08K 13/02

(54) **Flammgeschützte Kompositwerkstoffe**

(30) Priorität: 29.09.1995 DE 19536498
(71) Anmelder: FRAUNHOFER-GESELLSCHAFT ZUR FÖRDERUNG DER ANGEWANDTEN FORSCHUNG E.V., 80636 München (DE)
(72) Erfinder: Storch, Werner, 97204 Höchberg (DE); Wolter, Herbert, 97950 Gerchsheim (DE); Braun, Ansger, 96515 Sonneberg (DE)
(74) Vertreter: Olgemöller, Luitgard, Dr.

(57) **Zusammenfassung**

Die Erfindung betrifft einen flammgeschützten Kompositwerkstoff, enthaltend
(a) ein Harz, hergestellt unter Verwendung mindestens einer Verbindung I

   XₐR_{b}SiR'_{(4-a-b)} I

   mit
   - X =: hydrolysierbare Gruppe
   - R =: gegebenenfalls substituiertes Alkyl, Aryl, Alkenyl, Alkylaryl oder Arylalkyl,
   - R' =: organischer Rest mit mindestens einer polymerisierbaren Gruppe,
   - a =: 1 bis 3,
   - b =: 0 bis 2
(b) mindestens ein anorganisches, flammhemmendes Hydroxid, Sulfat und/oder Hydrat.

## Beschreibung

Die vorliegende Erfindung betrifft das Gebiet der anorganisch-organischen Kompositwerkstoffe. Insbesondere ist die Erfindung auf solche flammgeschützte Komposite gerichtet.

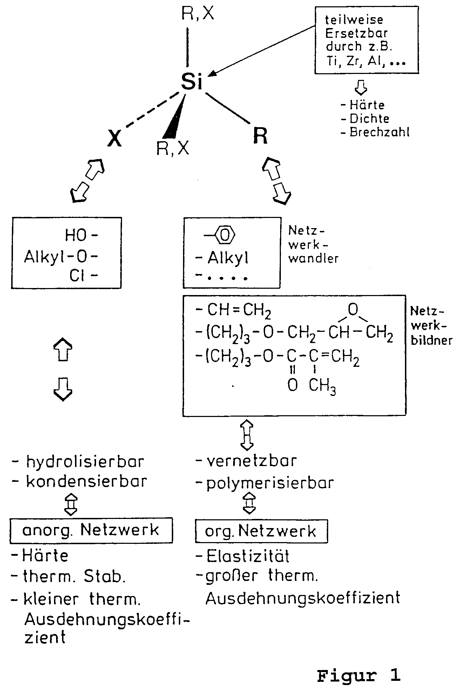

Anorganisch-organische Copolymere (häufig mit der Bezeichnung "ORMOCERE" für "organically modified ceramics" benannt) leiten sich im Prinzip von Strukturen ab, wie sie in Figur 1 dargestellt sind. Solche copolymeren Werkstoffe erfüllen insbesondere bei hohen organischen Anteilen nicht die Anforderungen der Brennbarkeitsklasse UL 94, d.h. sie sind brennbar und nicht selbstverlöschend. Für viele Anwendungen ist aber eine brandhemmende Wirkung erwünscht bzw. Voraussetzung. Deshalb hat man zu solchen Werkstoffen bisher halogenhaltige oder phosphorhaltige Flammschutzmittel zugesetzt. Aufgrund toxikologischer Probleme ist ein Verzicht der sehr wirksamen halogenhaltigen Flammschutzmittel wünschenswert. Auch anorganisch-organische Komposite auf Basis der in den nachstehenden Formeln I bis VI definierten Silane sind, insbesondere bei hohem organischem Anteil, d. h. trotz der anorganischen Strukturelemente, in Abwesenheit von Flammschutzmitteln leicht brennbar und somit nur eingeschränkt einsatzfähig.

Es ist daher Aufgabe der Erfindung, anorganisch-organische Komposite mit einem Harz, hergestellt unter Verwendung mindestens einer Verbindung I

XₐR_{b}SiR'_{(4-a-b}) I

mit
- X =: hydrolysierbare Gruppe, z. B. Wasserstoff, Halogen, Hydroxy, Alkoxy, Acyloxy, Alkylcarbonyl, Alkoxycarbonyl oder eine Aminoverbindung,
- R =: gegebenenfalls substituiertes Alkyl, Aryl, Alkenyl, Alkylaryl oder Arylalkyl,
- R^{'} =: organischer Rest mit mindestens einer polymerisierbaren Gruppe, z.B. einer Doppelbindung oder einer Epoxygruppe,
- a =: 1 bis 3,
- b =: 0 bis 2
zur Verfügung zu stellen, die eine gute Flammschutzwirkung besitzen.

Unter "Harz" ist dabei jede Masse zu verstehen, die wie vorstehend hergestellt ist, und zwar unabhängig vom Zustand der Bestandteile, also z.B. sowohl vor der Kondensation, in teilweise hydrolysiertem/kondensierten Zustand als auch vollständig durchkondensiert.

Die Aufgabe wird dadurch gelöst, daß anorganisch-organische Komposite bereitgestellt werden, in denen einem Harz auf der genannten Basis ein pulveriges anorganisches, flammhemmendes Hydroxid, Sulfat und/oder Hydrat zugesetzt ist. Bevorzugt handelt es sich dabei um Substanzen wie Aluminiumhydroxid, Magnesiumhydroxid, Dihydratgips und dergleichen.

Überraschenderweise konnte gefunden werden, daß die obigen Verbindungen - wahrscheinlich aufgrund der in der Harz-Matrix enthaltenen anorganischen Struktureinheiten - über die Partikeloberfläche fest in die Matrix eingebunden werden. Dies könnte auf dem Wege der Anbindung an SiOH-Bindungen erfolgen, die wegen der zu erwartenden unvollständigen Durchkondensierung in den genannten Harzen vorliegen, z.B gemäß nachstehender Formel:

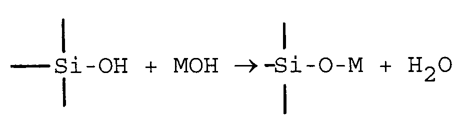

Damit wird neben der flammhemmenden Wirkung (UL-94 kann bei entsprechender Zugabemenge erfüllt werden) zusätzlich eine deutliche Festigkeitssteigerung beobachtet. Neben der geringen Wasseraufnahme ist dies ein Hinweis für die chemische Einbindung der flammhemmenden Teilchen. Eine solche Einbindung läßt sich ansonsten nur durch vorherige Silanisierung des verwendeten Füllstoffs erzielen. Eine Silanisierung von z. B. Aluminiumhydroxidpartikeln kann daher entfallen, was zu einer erheblichen Verbilligung führt. Die Erfindung stellt daher äußerst preiswerte, aber dabei hochwertige flammgeschützte Kompositwerkstoffe auf der Basis anorganisch-organischer Copolymere zur Verfügung.

Die eingesetzten Matrices für die Komposite lassen sich aufgrund der Variabilität in den Ausgangsmaterialien in ihren mechanischen Eigenschaften in weiten Grenzen einstellen. Diese Variabilität läßt sich auch auf die daraus hergestellten Komposite selbst übertragen. Üblicherweise enthalten die Komposite 10 bis 90 Gew.-%, bevorzugt 20 bis 50 Gew.-% Harz und 5 bis 70 Gew.-%, bevorzugt 10 bis 40 Gew.-% und ganz bevorzugt 10 bis 30 Gew.-% des flammhemmenden Hydroxids, Sulfats und/oder Hydrats. Bei diesen Substanzen kann es sich um sehr feine Pulver, feine oder aber auch gröber gekörnte Pulver handeln. Feine Partikel sind bevorzugt, da hierbei die Oberfläche der Systemgrenzen besonders hoch ist, wodurch die vorgenannten Vorteile besonders zum Tragen kommen. Zusätzlich können weitere anorganische Füllmittel, beispielsweise Quarzmehl und dergleichen oder Fasern (z. B. Glas-, Kohle- oder Textilfasern) zugesetzt werden. Die Fasern können in Form von Kurzfasern, Langfasern, Geweben oder anderen textilen Flächengebilden eingesetzt werden. Füllstoffe und Fasern werden üblicherweise in Mengen bis zu etwa 70 Gew.-%, bevorzugt von 10 bis 40 Gew.-% eingesetzt. Sie dienen insbesondere der Erhöhung der Festigkeit, des Elastizitätsmoduls und der Schlagzähigkeit. Auch andere Parameter wie der Ausdehnungskoeffizient lassen sich mit den erfindungsgemäßen Kompositen auf günstige Werte einstellen.

In einer besonderen Ausführungsform werden dem Kompositwerkstoff zusätzlich phosphorhaltige Mittel zugesetzt, die flüssig oder - bevorzugt - pulverförmig sein können, um eine synergistische Verstärkung der Flammschutzwirkung zu realisieren. Dabei können bis zu etwa 50 Gew.-% des flammhemmenden Hydroxids, Sulfates oder Hydrates durch Phosphorverbindungen ersetzt sein.

Es hat sich gezeigt, daß bei einem Harzgehalt von 30 Gew.-% ein Aluminiumhydroxidgehalt von 20 Gew.-% ausreicht, um die Brennbarkeitsklasse 0 (für höchste Anforderungen) der UL-94 zu erreichen. Durch Zugabe eines phosphorhaltigen Mittels wird ein noch schnelleres Verlöschen der Flamme erreicht (Beispiel: 15 Gew.-% Hostaflon AP 423 plus 15 Gew.-% Aluminiumhydroxid). Durch Zugabe von Glasfasern (bevorzugt mit Methacrylatgruppen als Oberflächenmodifizierung versehen) kann die Schlagzähigkeit deutlich gesteigert werden, z.B. bei einem Werkstoff aus 30 Gew.-% Harz, 30 Gew.-% Al(OH)₃ und 40 Gew.-% Glasfasern mit 4,5 mm Länge auf ≥ 15kJ/m². Durch die Zugabe von Aluminiumhydroxid anstelle von silanisiertem Quarzmehl wird eine deutliche Festigkeitssteigerung erreicht, d. h. es erfolgt eine gute chemische Anbindung der Hydroxidpartikel an die Matrix.

In besonderen Ausführungsformen der Erfindung bezieht sich diese auf flammgeschützte Kompositwerkstoffe, worin das Harz unter Verwendung von Verbindungen der nachstehenden Formeln II bis VI hergestellt ist:

YₙSiXₘ R₄₋₍ₙ₊ₘ₎ II

{XₐR_{b}Si[R⁵(A)_{c}]_{(4-a-b)}}ₓB III

{XₐR_{b}Si[(R⁵A)_{c}]_{(4-a-b)}}ₓB IV

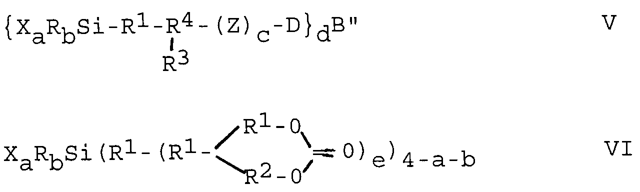

worin
X, R, R', a und b die in Anspruch 1 angegebene Bedeutung besitzen und
Y ein Substituent ist, der einen substituierten oder unsubstituierten 1,4,6-Trioxaspiro-[4,4]-nonan-Rest enthält,
A = O, S, PR'', POR'', NHC(O)O oder NHC(O)NR'' ist, wobei R'' Wasserstoff, Alkyl oder Aryl ist,
D = O, S, NH oder C(O)O ist,
Z = CO oder CHR''' ist, wobei R''' Wasserstoff, Alkyl, Aryl oder Alkylaryl ist,
R¹ = Alkylen, Arylen, Arylenalkylen oder Alkylenarylen mit jeweils 0 bis 10 Kohlenstoffatomen ist, wobei diese Reste durch Sauerstoff- und/oder Schwefelatome und/oder durch Aminogruppen unterbrochen sein können,
R² = Alkylen, Arylen, Arylenalkylen oder Alkylenarylen mit jeweils 1 bis 10 Kohlenstoffatomen ist, wobei diese Reste durch Sauerstoff- und/oder Schwefelatome und/oder durch Aminogruppen unterbrochen sein können,
R³ = Wasserstoff, Hydroxy oder eine Carbonsäuregruppe ist,
R⁴ = R² oder Stickstoff ist,
R⁵ = Alkylen, Arylen oder Alkylenarylen ist,
B ein geradkettiger oder verzweigter organischer Rest ist, der sich von einer Verbindung B' mit mindestens einer (für c = 1 und A = NHC(O)O oder NHC(O)NR'') bzw. mindestens 2 C=C-Doppelbindungen und 5 bis 50 Kohlenstoffatomen ableitet,
B'' ein geradkettiger oder verzweigter organischer Rest mit mindestens einer C=C-Doppelbindung und 4 bis 50 Kohlenstoffatomen ist,
c = 0 oder 1 ist,
d eine ganze Zahl zwischen 1 und 4 ist,
e eine ganze Zahl zwischen 1 und 6 ist,
n und m = 1, 2 oder 3 sind, und
x eine ganze Zahl ist, deren Maximalwert der Anzahl von Doppelbindungen in der Verbindung B' minus 1 entspricht bzw. gleich der Anzahl von Doppelbindungen in der Verbindung B' ist, wenn C=1 und A für NHC(O)O oder NHC(O)NR'' steht.

Silanharze auf Basis der genannten Verbindungen sind Stand der Technik und beispielsweise in den europäischen Patentanmeldungen mit den Veröffentlichungsnummern 450 624, 451 709 und 525 392 sowie den deutschen Patentanmeldungen/Patenten P 40 11 044, P 44 16 857 C1 und P 44 23 811.8 offenbart. Dabei kann das Harz zusätzlich unter Verwendung weiterer Substanzen hergestellt sein, wobei beispielsweise aufgeführt seien: eine oder mehrere andere hydrolytisch kondensierbare Verbindungen des Siliciums und/oder anderer Elemente aus der Gruppe B, Al, P, Sn, Pb, der Übergangsmetalle, der Lanthaniden und der Aktiniden, copolymerisierbare Monomere und/oder Oligomere aus der Gruppe Spiroorthoester, Spiroorthocarbonate, bicyclische Spiroorthoester, Mono- oder Oligo-Epoxide, Epoxysilane, ferner Acrylate und/oder Methacrylate und/oder hydrolytisch kondensierbare Aluminium-, Titan- oder Zirkonverbindungen.

Mit den beschriebenen flammgeschützten Kompositen stellt die vorliegende Erfindung preiswerte Werkstoffe zur Verfügung, die für vorgesehene Anwendungen maßgeschneidert werden können. Durch die vorstehend beschriebenen Vorteile wie Nichtbrennbarkeit, Einstellbarkeit von Parametern wie z.B. Elastizitätsmodul und Ausdehnungskoeffizienten, hohe Festigkeit und Schlagzähigkeit ist das Anwendungspotential der Kompositwerkstoffe im Vergleich zu Werkstoffen im Stand der Technik erheblich erweitert, da nun insbesondere auch großtechnische Anwendungen möglich sind. Hier seien Anwendungen in der Elektrotechnik, im Bauwesen, im Automobilbau, in der Medizintechnik usw. erwähnt, bei denen eine hohe Festigkeit und hohe Flammwidrigkeit benötigt wird. Natürlich sind diese Gebiete nur als Beispiele angegeben. Die Komposite können mit den üblichen Formgebungsverfahren wie z. B. Pressen, Prägen, Extrusion, Spritzpressen und Spritzguß großtechnisch verarbeitet werden. Die Härtung kann thermisch, photochemisch oder auch selbsthärtend erfolgen.

### Beispiele

### A. Herstellung des Harzes A (Beispiele 1, 3 und 4):

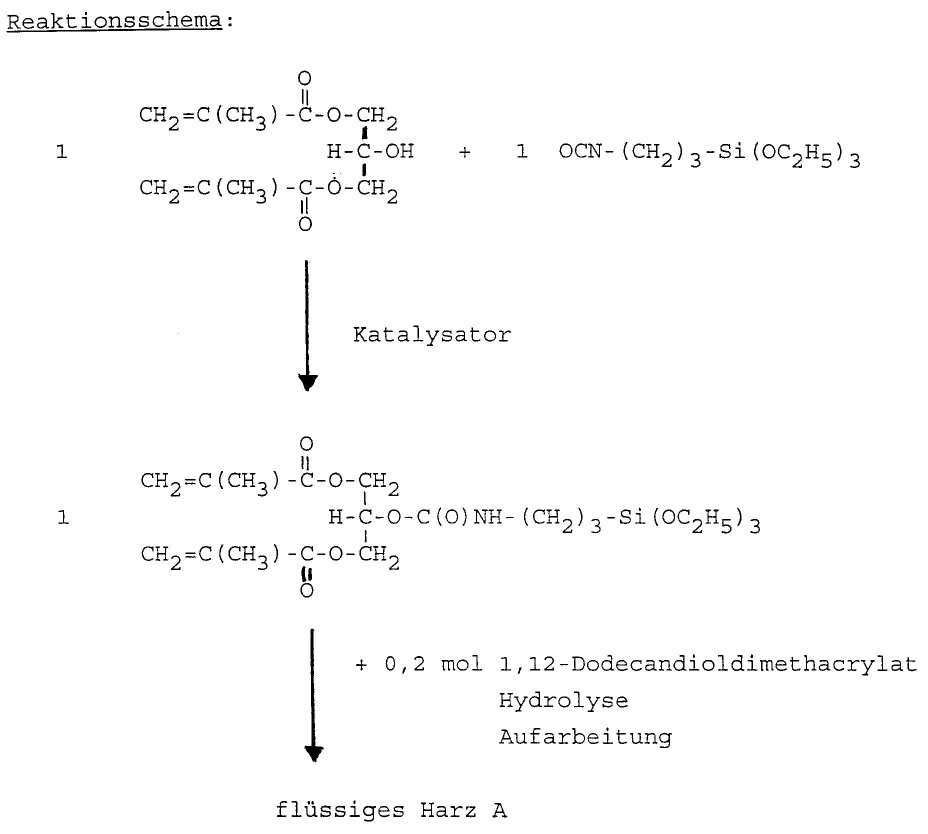

### Synthese:

Zur Vorlage von 114,1 g (0,5 mol) Glycerin-1,3-dimethacrylat und Dibutylzinndilaurat (als Additionskatalysator) werden bei Raumtemperatur unter trockener Luft 123,7 g (0,5 mol) 3-Isocyanatopropyltriethoxysilan zugetropft. Nach etwa 2-stündigem Rühren ist die Addition vollzogen (IR-Kontrolle). Zur Hydrolyse und Kondensation werden ca. 1000 ml Essigester sowie 21.6 g Wasser (incl. Katalysator) zugesetzt. Als Reaktivlösungsmittel werden 67,7 g (0,2 mol) 1,12-Dodecandioldimethacrylat zugesetzt.

Nach ca. 1-tägigem Rühren bei Raumtemperatur wird mit Wasser ausgeschüttelt, filtriert, einrotiert und an der Ölpumpe vollständig von flüchtigen Bestandteilen befreit. Das klare, nahezu farblose Harz wird in einer Ausbeute von ca. 94 % erhalten und kann so für die Einarbeitung der Füllstoffe, Fasern und flammhemmenden Mittel und die folgende Aushärtung eingesetzt werden.

### B. Herstellung des Harzes B (Beispiel 2):

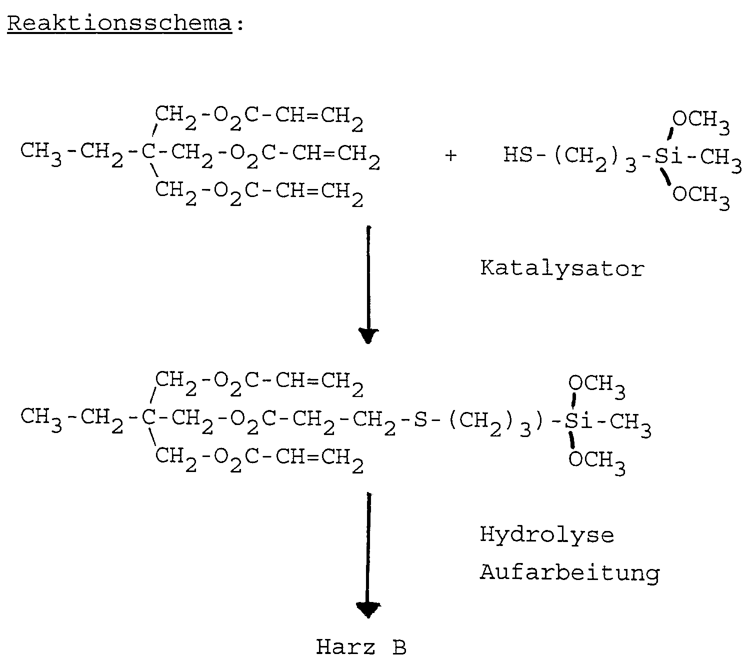

### Synthese:

Zur Vorlage von 19,3 g (0,2 mol) Trimethylolpropantriacrylat (TMPTA) in 200 ml Essigester werden 36,1 g (0,2 mol) Mercaptopropylmethyldimethoxysilan unter Schutzgasatmosphäre zugetropft. Unter Kühlung werden 12,6 g einer ethanolischen KOH-Lösung langsam zugetropft. Nach etwa 5 Minuten ist die Reaktion (Thioladdition) abgeschlossen. Zur Hydrolyse und Kondensation der Methoxygruppen werden 5,8 g 0,5n HCl zugetropft. Nach ca. 1-tägigem Rühren bei Raumtemperatur wird mit Wasser ausgeschüttelt, filtriert, einrotiert und an der Ölpumpe vollständig von flüchtigen Bestandteilen befreit. Das klare Harz wird in einer Ausbeute von ca. 97 % erhalten und kann so für die Einarbeitung der Füllstoffe, Fasern und flammhemmenden Mittel und die folgende Aushärtung eingesetzt werden.

### Beispiel 1:

Ein Kompositmaterial hat folgende Zusammensetzung:
(a) Harz A 30 Gew.-%
(b) Al(OH)₃ 30 Gew.-%
(c) Kurzglasfasern 40 Gew.-%

Das Al(OH)₃ wurde unter dem Namen Martinal OL-111/LE von der Martinswerke GmbH bezogen, die Kurzglasfasern sind als Vetrotex EC 10 (4,5 mm, P 327), zu beziehen bei Vetrotex Deutschland GmbH, im Handel. Diese Komponenten werden mittels eines Mischkneters gut vermischt, wobei noch 1 Gew.-% thermischer Starter, bezogen auf die Harzmenge, zugesetzt wird. Diese Masse wird in einer Form zu Platten verpreßt und thermisch bei 140 bis 160°C 30 Minuten lang ausgehärtet. Die Festigkeit beträgt etwa 135 MPa bei einem E-Modul von 7 GPa. Der Ersatz von Aluminiumhydroxid durch ein silanisiertes Quarzmehl reduziert die Festigkeit auf 70 MPa. Darüberhinaus wurde festgestellt, daß trotz der Zugabe von Hydroxiden die Wasseraufnahme mit <2 Vol.-% vergleichsweise gering ist. Dies bedeutet, daß die Hydroxidpartikel sehr gut in die Matrix eingebunden sind.

Eigenschaften:
Brennbarkeitsklasse V0 der UL 94
Schlagzähigkeit = 25 kJ/m²

### Beispiel 2

Ein Kompositmaterial hat folgende Zusammensetzung:
(a) Harz B 30 Gew.-%
(b) Al(OH)₃ 30 Gew.-%
(c) Kurzglasfasern 40 Gew.-%

Das Al(OH)₃ wurde unter dem Namen Martinal OL-111/LE von der Martinswerke GmbH bezogen, die Kurzglasfasern sind als Vetrotex EC 10 (4,5 mm, P 327), zu beziehen bei Vetrotex Deutschland GmbH, im Handel. Diese Komponenten werden mittels eines Mischkneters gut vermischt, wobei noch 1 Gew.-% thermischer Starter, bezogen auf die Harzmenge, zugesetzt wird. Diese Masse wird in einer Form zu Platten verpreßt und thermisch bei 140 bis 160°C 30 Minuten lang ausgehärtet. Die Festigkeit beträgt etwa 145 MPa bei einem E-Modul von 9 GPa. Darüberhinaus wurde festgestellt, daß trotz der Zugabe von Hydroxiden die Wasseraufnahme mit <2 Vol.-% vergleichsweise gering ist. Dies bedeutet, daß die Hydroxidpartikel sehr gut in die Matrix eingebunden sind.

Eigenschaften:
Brennbarkeitsklasse V0 der UL 94
Schlagzähigkeit = 20 kJ/m²

### Beispiel 3

Ein Kompositmaterial hat folgende Zusammensetzung:
(a) Harz A 30 Gew.-%
(b) Mg(OH)₂ 30 Gew.-%
(c) Kurzglasfasern 40 Gew.-%

Das Mg(OH)₂ wurde unter dem Namen Magnifin H10 von der Martinswerke GmbH bezogen, die Kurzglasfasern sind als Vetrotex EC 10 (4,5 mm, P 327), zu beziehen bei Vetrotex Deutschland GmbH, im Handel. Diese Komponenten werden mittels eines Mischkneters gut vermischt, wobei noch 1 Gew.-% thermischer Starter, bezogen auf die Harzmenge, zugesetzt wird. Diese Masse wird in einer Form zu Platten verpreßt und thermisch bei 140 bis 160°C 30 Minuten lang ausgehärtet. Die Festigkeit beträgt etwa 130 MPa bei einem E-Modul von 10 GPa. Darüberhinaus wurde festgestellt, daß trotz der Zugabe von Hydroxiden die Wasseraufnahme mit <2 Vol.-% vergleichsweise gering ist. Dies bedeutet, daß die Hydroxidpartikel sehr gut in die Matrix eingebunden sind.

Eigenschaften:
Brennbarkeitsklasse V0 der UL 94
Schlagzähigkeit = 18 kJ/m²

### Beispiel 4

Ein Kompositmaterial hat folgende Zusammensetzung:
(a) Harz A 30 Gew.-%
(b) Al(OH)₃ 15 Gew.-%
(c) Kurzglasfasern 40 Gew.-%
(d) Hostaflam AP 423 15 Gew.-%

Das Al(OH)₃ wurde unter dem Namen Martinal OL-111/LE von der Martinswerke GmbH bezogen, die Kurzglasfasern sind als Vetrotex EC 10 (4,5 mm, P 327), zu beziehen bei Vetrotex Deutschland GmbH, im Handel. Das Hostaflam AP 423 ist ein phosphorhaltiges Flammschutzmittel von der Hoechst AG. Diese Komponenten werden mittels eines Mischkneters gut vermischt, wobei noch 1 Gew.-% thermischer Starter, bezogen auf die Harzmenge, zugesetzt wird. Die Masse wird in einer Form zu Platten verpreßt und thermisch bei 140 bis 160°C 30 Minuten lang ausgehärtet. Die Festigkeit beträgt etwa 110 MPa bei einem E-Modul von 10 GPa. Darüberhinaus wurde festgestellt, daß trotz der Zugabe von Hydroxiden die Wasseraufnahme mit <2 Vol.-% vergleichsweise gering ist. Dies bedeutet, daß die Hydroxidpartikel sehr gut in die Matrix eingebunden sind.

Eigenschaften:
Brennbarkeitsklasse V0 der UL 94 (sofortiges Verlöschen der Flamme nach Entfernen der Zündquelle)
Schlagzähigkeit = 15 kJ/m²

## Patentansprüche

1. Flammgeschützter Kompositwerkstoff, enthaltend
(a) ein Harz, hergestellt unter Verwendung mindestens einer Verbindung I
XₐR_{b}SiR'_{(4-a-b)} I
mit
X = hydrolysierbare Gruppe
R = gegebenenfalls substituiertes Alkyl, Aryl, Alkenyl, Alkylaryl oder Arylalkyl,
R' = organischer Rest mit mindestens einer polymerisierbaren Gruppe,
a = 1 bis 3,
b = 0 bis 2
(b) mindestens ein anorganisches, flammhemmendes Hydroxid, Sulfat und/oder Hydrat.

2. Flammgeschützter Kompositwerkstoff nach Anspruch 1, enthaltend Aluminiumhydroxid, Magnesiumhydroxid und/oder Dihydratgips.

3. Flammgeschützter Kompositwerkstoff nach Anspruch 1 oder 2, zusätzlich enthaltend
(c) mindestens ein phosphorhaltiges Flammschutzmittel.

4. Flammgeschützter Kompositwerkstoff nach einem der Ansprüche 1 bis 3, zusätzlich enthaltend
(d) mindestens einen teilchen- oder faserförmigen Füllstoff oder Verstärkungswerkstoff.

5. Flammgeschützter Kompositwerkstoff nach Anspruch 4, worin der Bestandteil (d) unter Quarzmehl und Glas-, Kohle- und Textilfasern in Form von Kurzfasern, Langfasern, Geweben oder anderen textilen Flächengebilden ausgewählt ist.

6. Flammgeschützter Kompositwerkstoff nach einem der voranstehenden Ansprüche, enthaltend
(a) 10 bis 90 Gew.-% Harz
(b) 5 bis 70 Gew.-% flammhemmendes Hydroxid, Sulfat und/oder Hydrat, sowie
(c) 0 bis 35 Gew.-% phosphorhaltiges Flammschutzmittel.
(d) 0 bis 80 Gew.-% Füllstoff.

7. Flammgeschützter Kompositwerkstoff nach einem der voranstehenden Ansprüche, enthaltend
(a) 20 bis 50 Gew.-% Harz
(b) 10 bis 40 Gew.-% flammhemmendes Hydroxid, Sulfat und/oder Hydrat, sowie
(c) 0 bis 20 Gew.-% phosphorhaltiges Flammschutzmittel.
(d) 10 bis 40 Gew.-% Füllstoff.

8. Flammgeschützter Kompositwerkstoff nach einem der Ansprüche 1 bis 7, worin das Harz hergestellt ist unter Verwendung von mindestens einer Verbindung der nachstehenden Formeln II bis VI
YₙSi XₘR₄₋₍ₙ₊ₘ₎ II
{XₐR_{b}Si[R⁵(A)_{c}]_{(4-a-b)}}ₓB III
{XₐR_{b}Si[(R⁵A)_{c}]_{(4-a-b)}}ₓB IV 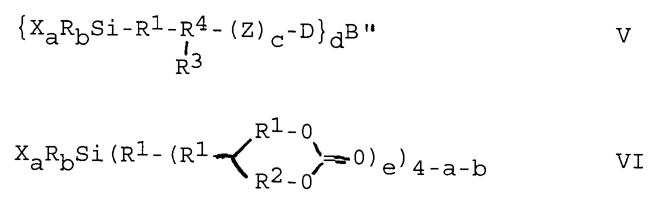
worin
X, R, R', a und b die in Anspruch 1 angegebene Bedeutung besitzen und
Y ein Substituent ist, der einen substituierten oder unsubstituierten 1,4,6-Trioxaspiro-[4,4]-nonan-Rest enthält,
A = O, S, PR'', POR'', NHC(O)O oder NHC(O)NR'' ist, wobei R'' Wasserstoff, Alkyl oder Aryl ist,
D = O, S, NH oder C(O)O ist,
Z = CO oder CHR''' ist, wobei R''' Wasserstoff, Alkyl, Aryl oder Alkylaryl ist,
R¹ = Alkylen, Arylen, Arylenalkylen oder Alkylenarylen mit jeweils 0 bis 10 Kohlenstoffatomen ist, wobei diese Reste durch Sauerstoff- und/oder Schwefelatome und/oder durch Aminogruppen unterbrochen sein können,
R² = Alkylen, Arylen, Arylenalkylen oder Alkylenarylen mit jeweils 1 bis 10 Kohlenstoffatomen ist, wobei diese Reste durch Sauerstoff- und/oder Schwefelatome und/oder durch Aminogruppen unterbrochen sein können,
R³ = Wasserstoff, Hydroxy oder eine Carbonsäuregruppe ist,
R⁴ = R² oder Stickstoff ist,
R⁵ = Alkylen, Arylen oder Alkylenarylen ist,
B ein geradkettiger oder verzweigter organischer Rest ist, der sich von einer Verbindung B' mit mindestens einer (für c = 1 und A = NHC(O)O oder NHC(O)NR'') bzw. mindestens 2 C=C-Doppelbindungen und 5 bis 50 Kohlenstoffatomen ableitet,
B'' ein geradkettiger oder verzweigter organischer Rest mit mindestens einer C=C-Doppelbindung und 4 bis 50 Kohlenstoffatomen ist,
c = 0 oder 1 ist,
d eine ganze Zahl zwischen 1 und 4 ist
e eine ganze Zahl zwischen 1 und 6 ist,
n und m = 1, 2 oder 3 sind, und
x eine ganze Zahl ist, deren Maximalwert der Anzahl von Doppelbindungen in der Verbindung B' minus 1 entspricht bzw. gleich der Anzahl von Doppelbindungen in der Verbindung B' ist, wenn C=1 und A für NHC(O)O oder NHC(O)NR'' steht.

9. Flammgeschützter Kompositwerkstoff nach einem der voranstehenden Ansprüche, worin das Harz zusätzlich unter Verwendung einer oder mehrerer anderer hydrolytisch kondensierbarer Verbindungen des Siliciums und/oder anderer Elemente aus der Gruppe B, Al, P, Sn, Pb, der Übergangsmetalle, der Lanthaniden und der Aktiniden hergestellt ist.

10. Flammgeschützter Kompositwerkstoff nach einem der voranstehenden Ansprüche, worin das Harz weiterhin unter Verwendung von copolymerisierbaren Monomeren und/oder Oligomeren aus der Spiroorthoester, Spiroorthocarbonate, bicyclische Spiroorthoester, Mono- oder Oligo-Epoxide und Epoxysilane umfassenden Gruppe hergestellt ist.

11. Flammgeschützter Kompositwerkstoff nach einem der voranstehenden Ansprüche, worin das Harz zusätzlich unter Verwendung von Acrylaten und/oder Methacrylaten hergestellt ist.

12. Flammgeschützter Kompositwerkstoff nach einem der voranstehenden Ansprüche, worin das Harz zusätzlich unter Verwendung von hydrolytisch kondensierbaren Aluminium-, Titan- oder Zirkonverbindungen hergestellt ist.
